# EUROPÄISCHE PATENTSCHRIFT

(11) **EP 4 124 234 B1**
(45) Veröffentlichungstag und Bekanntmachung des Hinweises auf die Patenterteilung: **25.12.2024**
(21) Anmeldenummer: 22166627.4
(22) Anmeldetag: 05.04.2022
(51) Int. Cl.: A01D 61/00, A01F 12/10, B65G 15/44, B65G 19/08, B65G 23/06, B65G 47/84

(54) **SCHRÄGFÖRDERER UND SELBSTFAHRENDE ERNTEMASCHINE MIT EINEM SCHRÄGFÖRDERER**
INCLINED CONVEYOR AND SELF-PROPELLED HARVESTER WITH AN INCLINED CONVEYOR
TRANSPORTEUR INCLINÉ ET MACHINE DE RÉCOLTE AUTONOME DOTÉE D'UN TRANSPORTEUR INCLINÉ

(30) Priorität: 29.07.2021 DE 102021119744
(43) Veröffentlichungstag der Anmeldung: 01.02.2023
(73) Patentinhaber: CLAAS Selbstfahrende Erntemaschinen GmbH, 33428 Harsewinkel (DE)
(72) Erfinder: Westhoff, Mike, 59469 Ense (DE); Kortenjann, Ludger, 48231 Warendorf (DE)
(74) Vertreter: CLAAS Gruppe

(56) Entgegenhaltungen:
- DE-A1- 102016 116 548
- US-A- 3 888 132
- US-A1- 2016 007 538

## Beschreibung

Die vorliegende Erfindung betrifft einen Schrägförderer mit einem Gehäuse, in dem zumindest ein Antriebsrad auf einer Antriebsachse zum Fördern von Erntegut in eine selbstfahrende Erntemaschine drehbar gelagert ist, wobei das zumindest eine Antriebsrad mittels einer sich konzentrisch zur Antriebsachse erstreckenden Nabe drehfest an einer Antriebswelle angeordnet ist, wobei das zumindest eine Antriebsrad koaxial zur Antriebsachse angeordnete Mitnehmer aufweist, die gleichmäßig verteilt an einer axialen Stirnfläche der Nabe angeordnet sind, wobei sich die Mitnehmer von der Nabe ausgehend zu einem offenen Ende hin erstrecken und zum form- und/oder kraftschlüssigen Transport eines Riemens vorgesehen sind. Die vorliegende Erfindung betrifft weiterhin eine selbstfahrende Erntemaschine mit einem Schrägförderer, welcher zumindest einen endlosen mit einer Verzahnung ausgeführten Riemen umfasst, welcher zumindest eine Antriebsrolle sowie eine Umlenkrolle umschlingt.

Mit einem an einer selbstfahrenden Erntemaschine angeordneten Vorsatzgerät geerntetes Erntegut wird mittels eines Schrägförderers in eine selbstfahrende Erntemaschine, beispielsweise einen Mähdrescher, gefördert, und dann dort verarbeitet. Zumeist werden bislang dafür als Kettenförderer ausgebildete Schrägförderer verwendet. Solche Schrägförderer weisen zumindest zwei parallel zueinander angeordnete Förderketten auf, zwischen denen Förderleisten zum Fördern des Erntegutes angeordnet sind. Bekannt ist aber auch die Verwendung von Riemen anstelle der Förderketten, beispielsweise aus einem gewebelagenverstärkten, vernetzten Polymer.

Ein Schrägförderer der eingangs genannten Art sowie eine entsprechende selbstfahrende Erntemaschine sind aus der DE 10 2016 116 548 A1 bekannt. Ein Antriebsrad des Schrägförderers weist Mitnehmer auf, die gleichmäßig verteilt an einer Nabe angeordnet sind, wobei sich die Mitnehmer von der Nabe ausgehend zu einem offenen Ende hin erstrecken und zum form- und/oder kraftschlüssigen Transport eines mit einer Verzahnung ausgeführten Riemens vorgesehen sind. Die Mitnehmer bilden die Zähne des Antriebsrades, welche in die Verzahnung des Riemens eingreifen. Eine den Mitnehmern zugewandte Außenfläche der Nabe ist konisch ausgebildet, so dass sich die Nabe in oder gegen eine axiale Richtung der Achse zum offenen Ende hin verjüngt. Zudem sind an den Mitnehmern Stege angeordnet, die sich radial nach innen zur konischen Außenfläche der Nabe erstrecken. Zwischen den Mitnehmern und der Nabe verbleibt in Umfangsrichtung ein kleiner ringförmiger Spalt, in den ein Ausräumer eingreifen kann. Zwischen zwei benachbarten Mitnehmern und deren Stegen verbleiben sich in axialer und radialer Richtung erstreckende Zwischenräume, in denen sich Erntegut ansammelt, ohne dass es von nachfolgendem Erntegut aus den Zwischenräumen abgeführt wird. Zwischen den Mitnehmern, der Nabe und dem das Antriebsrad abschnittsweise umschlingenden Riemen angesammeltes und aufgestautes Erntegut stört den formschlüssigen Eingriff der Mitnehmer in die Verzahnung, so dass es zu einem Übersetzverhalten oder Überspringen eines Mitnehmers kommt. Bei einem oder mehreren Übersetzern stehen auf der Oberseite des Riemens angeordnete Förderleisten nicht mehr parallel zueinander, wodurch ein gleichmäßiges Einziehen vom Erntegut nicht mehr gewährleistet ist. Zusätzlich führt das Auftreten von Übersetzern zu einer Verspannung zwischen einzelnen Riemen, wodurch der Verschleiß auf die einzelnen Zähne des Riemens zunimmt und die Verbindungsstelle stärker belastet wird. Die Verspannung durch einen Übersetzer hat ebenfalls einen negativen Effekt auf das Einzahnverhalten bzw. Eingriffsverhalten zwischen den Riemen und den Antriebsrädern. Unter einem Einzahnvorgang ist das Eingreifen eines Zahns des Riemens in einen Zwischenraum zwischen zwei Mitnehmern zu verstehen.

In Abhängigkeit vom zu bearbeitenden Erntegut der Bodenbeschaffenheit und mit steigender Feuchtigkeit besteht dabei die Gefahr, dass sich die Fördermittel, insbesondere die Antriebsmittel, des Schrägförderers mit Erntegutbestandteilen und/oder Bodenbestandteilen zusetzen.

Aufgabe der vorliegenden Erfindung ist es, einen Schrägförderer für eine selbstfahrende Erntemaschine bereitzustellen, bei dem Antriebsräder, die in Verbindung mit einem Riemen oder Gurtband im Schrägförderer zum Einsatz kommen, das Räumverhalten zur Beseitigung von Verschmutzungen in den Zahnzwischenräumen zu verbessern.

Die Aufgabe wird gelöst mit einem Schrägförderer mit den Merkmalen des unabhängigen Patentanspruchs 1 sowie einer selbstfahrenden Erntemaschine mit den Merkmalen des nebengeordneten Patentanspruchs 13. Vorteilhafte Ausführungsformen und Weiterbildungen sind den hiervon abhängigen Unteransprüchen zu entnehmen.

Gemäß dem Anspruch 1 wird ein Schrägförderer mit einem Gehäuse, in dem zumindest ein Antriebsrad auf einer Antriebsachse zum Fördern von Erntegut in eine selbstfahrende Erntemaschine drehbar gelagert ist, vorgeschlagen, wobei das zumindest eine Antriebsrad mittels einer sich konzentrisch zur Antriebsachse erstreckenden Nabe drehfest an einer Antriebswelle angeordnet ist, wobei das zumindest eine Antriebsrad koaxial zur Antriebsachse angeordnete Mitnehmer aufweist, die gleichmäßig verteilt an axialen Stirnfläche der Nabe angeordnet sind, wobei sich die Mitnehmer von der Nabe ausgehend zu einem offenen Ende hin erstrecken und zum form- und/oder kraftschlüssigen Transport eines mit einer Verzahnung ausgeführten Riemens vorgesehen sind. Erfindungsgemäß ist vorgesehen, dass eine den Mitnehmern zugewandte radiale Umfangsfläche der Nabe einen im Wesentlichen geradzylindrischen Verlauf aufweist, so dass sich zwischen den Mitnehmern und der radialen Umfangsfläche ein im Wesentlichen kreisringförmiger Freiraum ausbildet, der bis an die axiale Stirnfläche heranreicht, wobei jedem Antriebsrad ein an einem Gehäusebauteil des Gehäuses ortsfest angeordnetes Ausräumelement zugeordnet ist, welches in den Freiraum hineinragt und sich bis zur radialen Innenfläche erstreckt. Die radiale Umfangsfläche bildet die Außenseite eines flanschförmigen Abschnitts der Nabe, mit welcher dieser drehfest mit der Antriebswelle verbunden sein kann. Durch die Ausgestaltung der Nabe mit einer einen geradzylindrischen Verlauf aufweisenden radialen Umfangsfläche und der von dieser separierten Anordnung der Mitnehmer wird erreicht, dass das Ausräumelement bis zu der quer zur Antriebsachse erstreckenden axialen Stirnfläche der Nabe reicht. Das Ausräumelement greift von der offenen Seite des Antriebsrades her in den Freiraum ein.

Insbesondere kann das Gehäusebauteil, an dem das zumindest eine Ausräumelement angeordnet ist, eine das zumindest eine Antriebsrad abschnittsweise umgreifende Innenabdeckung sein. Die Innenabdeckung dient dem Schutz der Antriebswelle, indem ein Umschlingen der Antriebswelle durch Erntegut vermieden wird.

Gemäß einer Weiterbildung kann das zumindest eine Antriebsrad von dem Riemen abschnittsweise umschlungen sein, der eine Gesamtbreite aufweist, wobei sich der im Wesentlichen ringförmige Freiraum über die Gesamtbreite des Riemens erstreckt. Durch den Riemen mitgeförderte Erntegutbestandteile können nach der vorliegenden Erfindung über die gesamte Riemenbreite durch die Zwischenräume zwischen den Mitnehmern in Richtung Nabe gedrückt werden, ohne dass eine konstruktiv bedingte Störkontur die Erntegutbestandteile dabei einklemmt oder aufstaut.

Bevorzugt kann das Ausräumelement einen in den Freiraum ragenden Räumabschnitt aufweisen, welcher einen zur radialen Umfangsfläche tangentialen Verlauf aufweist.

Alternativ kann das Ausräumelement einen in den Freiraum ragenden Räumabschnitt aufweisen, welcher sich abschnittsweise in axialer Richtung der Nabe erstreckt und unter einem Winkel zur Antriebsachse zur radialen Umfangsfläche hingeneigt ist.

Durch die wahlweise kurvenförmige oder schräg angestellte Ausführung des in den Freiraum ragenden Räumabschnittes kann verhindert werden, dass die Erntegutbestandteile aufgeschoben werden. Stattdessen werden die Erntegutbestandteile in axialer Richtung zur offenen Seite des Antriebsrades hin nach außen abgeführt.

Gemäß einer bevorzugten Weiterbildung kann die Nabe als separates Bauteil ausgeführt sein. Die Nabe kann aus Vollmaterial in einem spanenden Fertigungsverfahren hergestellt werden oder als Schmiedeteil oder Gussbauteil mit anschließender spanender Bearbeitung gefertigt werden.

Insbesondere können die Mitnehmer kreiszylindrisch ausgeführt und aus einem Rundstahl gefertigt sein. Unter Beachtung von Toleranzen für das Rohmaterial kann eine Nachbearbeitung der Mitnehmer auf der Gesamtbreite des Riemens entfallen. Die Mitnehmer können untereinander unverbunden ausgeführt sein, d.h. sie können als separate Bauteile ausgeführt sein, die an der Nabe befestigt sind.

Weiter bevorzugt können die Nabe und die Mitnehmer auch als eine einstückige Einheit ausgeführt sein. Dabei kann die Einheit aus Nabe und Mitnehmern als ein Gussbauteil ausgeführt sein.

Bevorzugt sollten die Mitnehmer spielfrei mit der Nabe verbunden sein.

So können zur spielfreien Verbindung der Mitnehmer mit der Nabe diese durch einen Kegelsitz oder einen Pressverbund verbunden sein.

Weiter bevorzugt können die Mitnehmer mittels einer Schraubverbindung mit der Nabe verbunden sein. Die Mitnehmer können dabei durch eine Schraube gegen die Nabe gekontert sein.

Gemäß einer Weiterbildung kann dem zumindest einen Antriebsrad in Förderrichtung gesehen zumindest ein Abstreifelement vorgelagert an einem weiteren Gehäusebauteil angeordnet sein. Durch das zumindest eine zusätzliche Abstreifelement kann Abhilfe in Situationen geschaffen werden, in denen sich Erntegutbestandteile zwischen die radiale Innenfläche der Nabe und den Riemen setzen und dadurch zu einem Übersetzer des Riemens führen können. Hierbei kann das weitere Gehäusebauteil, an dem das zumindest eine zusätzliche Abstreifelement angeordnet ist, beispielsweise ein Querprofil sein, welches sich im Wesentlichen parallel zur Antriebsachse erstreckt. Bevorzugt können zu beiden Seiten des jeweiligen Riemens zwei Abstreifelemente einander gegenüberliegend angeordnet sein. Somit kann durch das beidseitige Abstreifen auf der Außenseite und der Innenseite des jeweiligen Riemens eine Ablagerung von Erntegutbestandteilen vermieden werden.

Dabei kann das Abstreifelement eine sich parallel zu dem umlaufenden Riemen bzw. zur Nabe erstreckende Wirkfläche aufweisen. Das zumindest eine zusätzliche Abstreifelement sitzt in Umlaufrichtung des Riemens vor der Nabe und ist gleichzeitig seitlich, entsprechend einer Führung, neben dem Riemen angeordnet. Dadurch können Erntegutbestandteile, welche über die Gesamtbreite des Riemens in Richtung der Nabe hinausragen, am Überstehen außerhalb der Gesamtbreite des Riemens gehindert werden, bevor die Verzahnung des Riemens mit dem Antriebsrad in Eingriff kommt.

Die eingangs gestellte Aufgabe wird weiterhin gelöst durch eine selbstfahrende Erntemaschine mit einem Schrägförderer gemäß dem Oberbergriff des Anspruches 13. Der Schrägförderer umfasst einen endlosen Riemen, welcher zumindest eine Antriebsrad sowie ein Umlenkrad umschlingt, wobei das zumindest eine Antriebsrad nach einem der Ansprüche 1 bis 12 ausgebildet ist. Das zumindest eine erfindungsgemäß ausgebildete Antriebsrad und das Umlenkrad sind bevorzugt in einem Gehäuse des Schrägförderers, insbesondere zwischen zwei einander gegenüberliegenden Gehäuseseitenwänden, drehbar gelagert.

Gemäß einer bevorzugten Weiterbildung kann der Schrägförderer zwei oder mehr Förderbänder aufweisen, die jeweils ein Antriebsrad und ein Umlenkrad umschlingen.

Insbesondere kann die selbstfahrende Erntemaschine als Mähdrescher ausgeführt sein.

Die vorliegende Erfindung wird nachstehend anhand eines in den Zeichnungen dargestellten Ausführungsbeispieles näher erläutert.

Es zeigen:
- Fig. 1: schematisch einen Ausschnitt aus einer selbstfahrenden Erntemaschine in einer Seitenansicht;
- Fig. 2: einen Ausschnitt aus einem Schrägförderer im Bereich seines Abgabeendes;
- Fig. 3: in (a) eine Teilansicht eines Antriebsrades mit einem Ausräumelement gemäß einer ersten Ausführungsform und in (b) eine Längsschnittansicht aus (a);
- Fig. 4: eine Teilansicht eines Antriebsrades mit einem Ausräumelement gemäß einer zweiten Ausführungsform; und
- Fig. 5: eine Teilansicht des Schrägförderers gemäß Fig. 2 mit einem dem Antriebsrad vorgelagerten Abstreifelement.

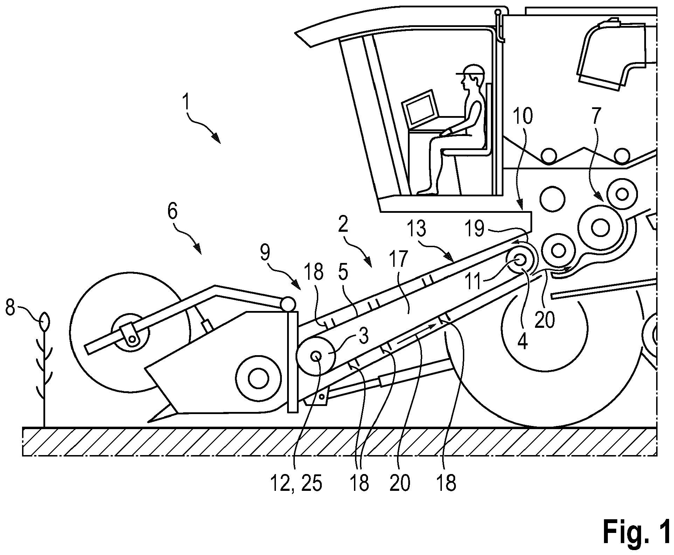

Fig. 1 zeigt schematisch einen Ausschnitt aus einer Anordnung mit einem Schrägförderer 2 und einer selbstfahrenden Erntemaschine 1, hier einem Mähdrescher. Im Folgenden werden die Begriffe Erntemaschine 1 und Mähdrescher synonym verwendet.

Der Schrägförderer 2 ist lösbar an der Erntemaschine 1 angeordnet. Er ist zwischen einem Vorsatzgerät 6 und der Erntemaschine 1 angeordnet. Das Vorsatzgerät 6 ist zum Aufnehmen von Erntegut 8 vorgesehen. Um das Erntegut 8 bodennah abschneiden zu können, ist der Schrägförderer 2 um eine Schwenkachse (nicht gezeigt) schwenkbar an der Erntemaschine 1 angeordnet, so dass das Vorsatzgerät 6 höhenverstellbar ist. Mit dem Schrägförderer 2 wird das Erntegut 8 zu dessen Verarbeitung in die Erntemaschine 1 gefördert. Das Erntegut 8 wird hier in einem Dreschwerk 7 der Erntemaschine verarbeitet.

Der Schrägförderer 2 weist zwei oder mehr Antriebsräder 4 und Umlenkräder 3 auf. Im Rahmen der Fig. 1 bis 6 wird die Erfindung aber anhand eines Antriebsrades 4 und eines Umlenkrades 3 beschrieben.

Das Umlenkrad 3 ist im Bereich eines Zuführendes 9 des Schrägförderers 2 angeordnet. Am Zuführende 9 ist das Vorsatzgerät 6 am Schrägförderer 2 befestigt. Das vom Vorsatzgerät 6 aufgenommene Erntegut 8 wird am Zuführende 9 in den Schrägförderer 2 eingeführt.

Das Antriebsrad 4 ist an einem dem Zuführende 9 gegenüberliegenden Abgabeende 10 des Schrägförderers 2 angeordnet, an dem das Erntegut 8 den Schrägförderer 2 verlässt. Das Erntegut gelangt in die Erntemaschine 1, hier in das Dreschwerk 7, zu dessen weiterer Verarbeitung.

Das Antriebsrad 4 ist mittels einer sich konzentrisch zu einer Antriebsachse 11 erstreckenden Nabe 22 drehfest an einer Antriebswelle 21 angeordnet. Ebenso ist das Umlenkrad 3 drehfest an einer Umlenkachse 12 angeordnete Umlenkwelle 25 gelagert. Sowohl die Antriebswelle 21 als auch die Umlenkwelle 25 sind drehbar in einem Gehäuse 13, hier in einander gegenüberliegenden Gehäuseseitenwänden 14, gelagert. Die im Wesentlichen vertikal verlaufenden Gehäuseseitenwände 14 sind durch eine Gehäuseunterwand 15 und eine Gehäuseoberwand 16, die sich zwischen den Gehäuseseitenwänden 14 horizontal zu diesen erstrecken, miteinander verbunden. Gemeinsam begrenzen die Gehäuseseitenwände 14, die Gehäuseunterwand 15 sowie die Gehäuseoberwand 16 einen insbesondere etwa quaderförmig ausgebildeten Innenraum 17 des Schrägförderers 2. Zum Fördern des Erntegutes 8 ist zumindest ein endloser Riemen 5 oder Gurtband vorgesehen, welcher das Antriebsrad 4 und das Umlenkrad 3 umschlingt. Auf dem Riemen 5 sind Förderleisten 18 äquidistant zueinander angeordnet, welche sich parallel zur Antriebsachse 11 erstrecken und der Mitnahme des Erntegutes 8 dienen.

In dem Schrägförderer 2 wird das Erntegut 8 unterschächtig gefördert. Das heißt, dass es entlang der Unterwand 15 gefördert wird. Dafür wird das Antriebsrad 4 in eine Drehrichtung 19 um die Antriebsachse 11 angetrieben. Eine Förderrichtung 20 des Erntegutes 8 ist hier durch zwei Pfeile, einer im Schrägförderer 2 und einer am Abgabeende 10, schematisch gezeigt.

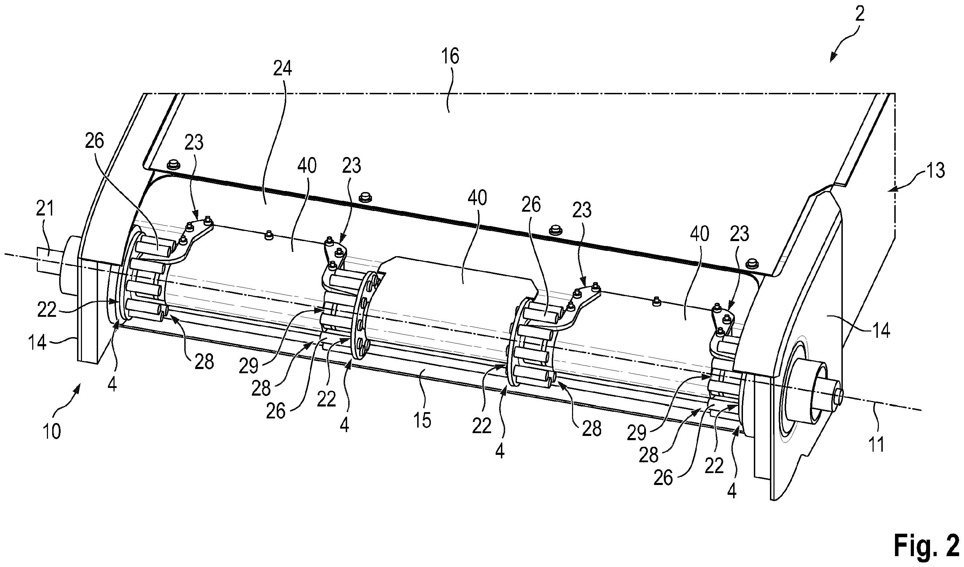

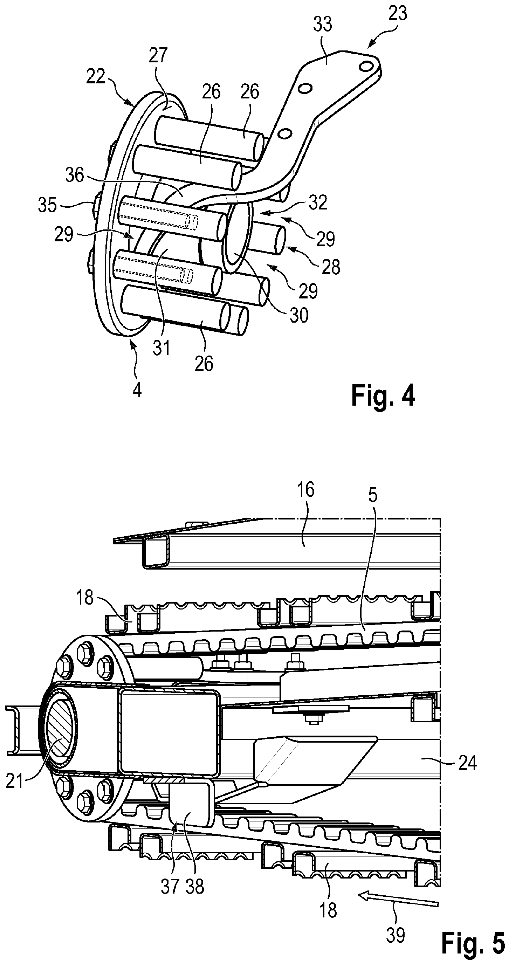

Die Darstellung in Fig. 2 zeigt einen Ausschnitt aus dem Schrägförderer 2 im Bereich seines Abgabeendes 10. Über die Antriebswelle 21 verteilt sind mehrere der Antriebsräder 4 angeordnet, die mit einem korrespondierenden Umlenkrad 3 am Zuführende 9 durch jeweils einen endlos umlaufenden Riemen 5 oder ein Gurtband trieblich verbunden sind. Der Riemen 5 ist, wie in Fig. 5 dargestellt, als ein Zahnriemen ausgeführt. Jedem Antriebsrad 4 ist ein an einem Gehäusebauteil des Gehäuses 13 ortsfest angeordnetes Ausräumelement 23 zugeordnet. Hier und vorzugsweise ist das jeweilige Ausräumelement 23 an einer Innenabdeckung 40 angeordnet. Die Innenabdeckung 40 dient dem Schutz der Antriebswelle 21. Hierzu umgreift die Innenabdeckung 40 die Antriebswelle 21 abschnittsweise. Durch die Innenabdeckung 40 wird vermieden, dass das Erntegut 8 die Antriebswelle 21 umschlingt.

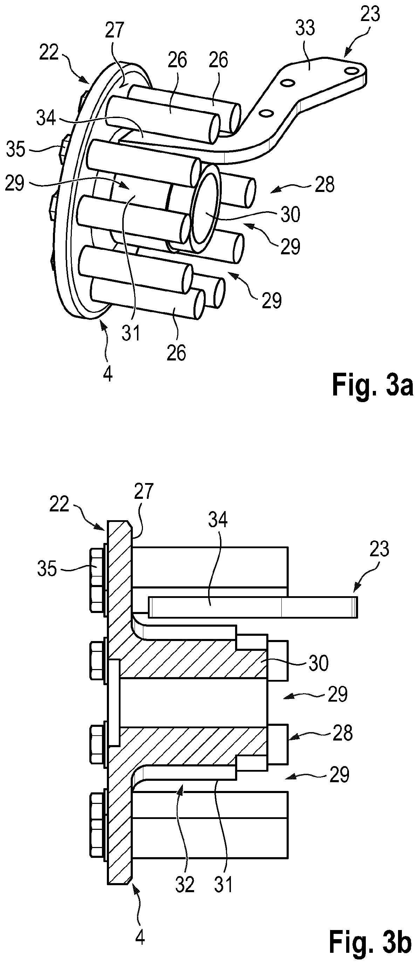

Auf der jeweiligen Nabe 22 eines Antriebsrades 4 sind Mitnehmer 26 gleichmäßig verteilt angeordnet. Hierzu sind die Mitnehmer 26 an einer axialen Stirnfläche 27 der Nabe 22 angeordnet, wie in Fig. 3 (a) dargestellt. Die Mitnehmer 26 sind koaxial zur Antriebsachse 11 angeordnet. Die Mitnehmer 26 sind hier und vorzugsweise kreiszylindrisch ausgeführt. Die Mitnehmer 26 sind untereinander unverbunden, d.h. sie sind als separate Bauteile ausgeführt. Insbesondere können die Mitnehmer 26 aus einem Rundstahl gefertigt sein. Die Mitnehmer 26 erstrecken sich von der Nabe 22 ausgehend zu einem offenen Ende 28 des Antriebsrades 4 hin. Die Mitnehmer 26 sind zum form- und/oder kraftschlüssigen Transport des Riemens 5 oder Gurtbandes vorgesehen. Zwischen den einzelnen Mitnehmern 26 sind Zwischenräume 29 vorgesehen, in welche die Verzahnung des jeweiligen Riemens 5 eingreift. Die axiale Stirnfläche 27 der Nabe 22 bildet einen Anschlag für den Riemen 5, welcher ein Verschieben des Riemens 5 in oder gegen eine axiale Richtung der Antriebsachse 11 begrenzt.

Fig. 3 (a) zeigt eine Teilansicht des Antriebsrades 4 mit einem Ausräumelement 23 gemäß einer ersten Ausführungsform und in Fig. 3 (b) eine Längsschnittansicht aus Fig. 3 (a). Auf der axialen Stirnfläche 27 der Nabe 22 sind die Mitnehmer 26 flanschförmig und drehfest angeordnet. Hierbei sollten die Mitnehmer 26 spielfrei mit der Nabe 22 verbunden sein. Die Mitnehmer 26 können zur spielfreien Verbindung mit der Nabe 22 durch einen Kegelsitz oder einen Pressverbund verbunden sein.

Die Nabe 22 weist einen flanschförmigen Abschnitt 30 auf, welcher der drehfesten Verbindung der Nabe 22 mit der Antriebswelle 21 dient. Die Mitnehmer 26 sind konzentrisch um den Abschnitt 30 herum angeordnet. Der flanschförmige Abschnitt 30 weist eine radiale Umfangsfläche 31 auf, welche, in axialer Richtung gesehen, einen im Wesentlichen geradzylindrischen Verlauf aufweist. Zwischen den Mitnehmern 26 und der radialen Umfangsfläche 31 bildet sich ein im Wesentlichen ringförmiger Freiraum 32 aus, der bis an die axiale Stirnfläche 27 heranreicht. Das an dem Gehäusebauteil des Gehäuses 13 ortsfest angeordnete Ausräumelement 23 ragt in den im Wesentlichen ringförmigen Freiraum 32 hinein und erstreckt sich bis zur axialen Stirnfläche 27. Die Mitnehmer 26 sind mittels einer Schraubverbindung 35 mit der Nabe 22 verbunden.

Das Ausräumelement 23 gemäß der in den Fig. 3 (a) und 3 (b) dargestellten Ausführungsform weist einen in den Freiraum 32 ragenden Räumabschnitt 34 auf, welcher sich abschnittsweise in axialer Richtung der Nabe 22 erstreckt und unter einem Winkel zur Antriebsachse 11 zur axialen Stirnfläche 27 hingeneigt ist. Der Räumabschnitt 34 ist schräg angestellt. Hierdurch wird ein Aufschieben von Erntegutbestandteilen vermieden, indem diese in Richtung des offenen Endes 28 des Antriebsrades 4 abgeführt werden. Der Räumabschnitt 34 ist in radialer und tangentialer Richtung derart dimensioniert, dass die Mitnehmer 26 und der Abschnitt 30 berührungslos um den im Freiraum 32 befindlichen Räumabschnitt 34 rotieren können. Mit einem Befestigungsabschnitt 33 kann das Ausräumelement 23 an der Innenabdeckung 40 befestigt sein. Insbesondere kann das Ausräumelement 23 lösbar an der Innenabdeckung 40 befestigt sein.

Fig. 4 stellt eine Teilansicht des Antriebsrades 4 mit einem Ausräumelement 23 gemäß einer zweiten Ausführungsform dar. Gemäß der in Fig. 4 dargestellten Ausführungsform des Ausräumelementes 23 weist dieses einen in den im Wesentlichen ringförmigen Freiraum 32 ragenden endseitigen Räumabschnitt 36 auf, welcher einen zur radialen Umfangsfläche 31 tangentialen Verlauf aufweist. Dabei ist der Räumabschnitt 36 sich in axialer Richtung verjüngend ausgebildet. Mit zunehmendem axialen Abstand von der radialen Umfangsfläche 31 verbreitert sich der Räumabschnitt 36. Der kurvenförmige Verlauf des Räumabschnitts 36 des Ausräumelementes 23 führt Erntegutbestandteile in Richtung des offenen Endes 28 des Antriebsrades 4 ab, wodurch ein Aufschieben von Erntegutbestandteilen vermieden wird.

Mit seinem Befestigungsabschnitt 33 kann das Ausräumelement 23 gemäß der beiden in den Fig. 3 (a), (b) und Fig. 4 dargestellten Ausführungsformen an der Innenabdeckung 40 als Gehäusebauteil des Gehäuses 13 befestigt sein. Insbesondere kann das jeweilige Ausräumelement 23 lösbar an der Innenabdeckung 40 befestigt sein.

In Fig. 5 ist eine Teilansicht des Schrägförderers gemäß Fig. 2 mit zumindest einem dem Antriebsrad 4 vorgelagerten Abstreifelement 37 dargestellt. Durch das zumindest eine zusätzliche Abtreifelement 37 kann Abhilfe in Situationen geschaffen werden, in denen sich Erntegutbestandteile zwischen die radiale Innenfläche 27 der Nabe 22 und den Riemen 5 setzen und so zu einem Übersetzer des Riemens 5 führen können. Die Anordnung des zumindest einen Abtreifelementes 37 kann an einem weiteren Gehäusebauteil des Gehäuses 13 erfolgen. Insbesondere kann das weitere Gehäusebauteil das Querprofil 24 sein, welches sich im Wesentlichen parallel zur Antriebsachse 11 erstreckt. Das Querprofil 24 ist hier und vorzugsweise an der Gehäuseoberwand 16 angeordnet. Bevorzugt können zu beiden Seiten eines Riemens 5 zwei Abstreifelemente 37 spiegelbildlich an dem Querprofil 24 und einander gegenüberliegend angeordnet sein.

Das Abstreifelement 37 weist eine sich parallel zu dem umlaufenden Riemen 5 bzw. zur axialen Stirnfläche 27 der Nabe 22 erstreckende Wirkfläche 38 auf. Das zusätzliche Abstreifelement 37 sitzt in Umlaufrichtung 39 des Riemens 5, die der Förderrichtung 20 entspricht, vor der Nabe 22 und ist gleichzeitig seitlich, entsprechend einer Führung, neben dem Riemen 5 angeordnet. Dadurch können Erntegutbestandteile, welche über die Gesamtbreite des Riemens 5 in Richtung der Nabe 22 hinausragen, am Überstehen außerhalb der Gesamtbreite des Riemens 5 auf der Seite des angeordneten Ausräumelementes 23 gehindert werden, bevor die Verzahnung des Riemens 5 mit dem Antriebsrad 4 in Eingriff kommt, am Überstehen außerhalb der Gesamtbreite des Riemens 5 auf der Seite des angeordneten Ausräumelementes 23 gehindert werden.

Zusammenfassend ist festzuhalten, dass das jeweilige Antriebsrad 4 auf der gesamten Riemenbreite einen im Wesentlichen ringförmigen Freiraum 32 unterhalb der Mitnehmer 26 des Antriebsrades 4 ausbildet, wodurch das Klemmverhalten und ein Aufstauen von Erntegutbestandteilen gegenüber dem Stand der Technik bereits reduziert wird.

Durch den Riemen 5 mitgeförderte Erntegutbestandteile können nach der vorliegenden Erfindung über die gesamte Riemenbreite durch die Zwischenräume 29 in Richtung der Nabe 22 gedrückt werden, ohne dass eine konstruktiv bedingte Störkontur die Erntegutbestandteile dabei einklemmt oder aufstaut. Ausräumelement 23 kann so gestaltet werden, dass bei einem Einzahnvorgang die am Riemen 5 mitgetragene Verschmutzung über die Gesamtbreite des Riemens 5 abgeführt, d.h. zum offenen Ende 28 des Antriebsrades 4 hin herausbefördert werden kann.

### Bezugszeichenliste

| | | | |
|---|---|---|---|
| 1 | Erntemaschine/Mähdrescher | 34 | Räumabschnitt |
| 2 | Schrägförderer | 35 | Schraubverbindung |
| 3 | Umlenkrad | 36 | Räumabschnitt |
| 4 | Antriebsrad | 37 | Abstreifelement |
| 5 | Riemen | 38 | Wirkfläche |
| 6 | Vorsatzgerät | 39 | Umlaufrichtung |
| 7 | Dreschwerk | 40 | Innenabdeckung |
| 8 | Erntegut | | |
| 9 | Zuführende | | |
| 10 | Abgabeende | | |
| 11 | Antriebsachse | | |
| 12 | Umlenkachse | | |
| 13 | Gehäuse | | |
| 14 | Gehäuseseitenwand | | |
| 15 | Gehäuseunterwand | | |
| 16 | Gehäuseoberwand | | |
| 17 | Innenraum von 2 | | |
| 18 | Förderleiste | | |
| 19 | Drehrichtung | | |
| 20 | Förderrichtung | | |
| 21 | Antriebswelle | | |
| 22 | Nabe | | |
| 23 | Ausräumelement | | |
| 24 | Querprofil | | |
| 25 | Umlenkwelle | | |
| 26 | Mitnehmer | | |
| 27 | Axiale Stirnfläche | | |
| 28 | Offenes Ende | | |
| 29 | Zwischenraum | | |
| 30 | Abschnitt von 22 | | |
| 31 | Radiale Umfangsfläche | | |
| 32 | Freiraum | | |
| 33 | Befestigungsabschnitt | | |

## Patentansprüche

1. Schrägförderer (2) mit einem Gehäuse (13), in dem zumindest ein Antriebsrad (4) auf einer Antriebsachse (11) zum Fördern von Erntegut (8) in eine selbstfahrende Erntemaschine (1) drehbar gelagert ist, wobei das zumindest eine Antriebsrad (4) mittels einer sich konzentrisch zur Antriebsachse (11) erstreckenden Nabe (22) drehfest an einer Antriebswelle (21) angeordnet ist, wobei das zumindest eine Antriebsrad (4) koaxial zur Antriebsachse (11) angeordnete Mitnehmer (26) aufweist, die gleichmäßig verteilt an einer axialen Stirnfläche (27) der Nabe (22) angeordnet sind, wobei sich die Mitnehmer (26) von der Nabe (22) ausgehend zu einem offenen Ende (28) hin erstrecken und zum formund/oder kraftschlüssigen Transport eines mit einer Verzahnung ausgeführten Riemens (5) vorgesehen sind, **dadurch gekennzeichnet, dass** eine den Mitnehmern (26) zugewandte radiale Umfangsfläche (31) der Nabe (22) einen im Wesentlichen geradzylindrischen Verlauf aufweist, so dass sich zwischen den Mitnehmern (26) und der radialen Umfangsfläche (31) ein im Wesentlichen ringförmiger Freiraum (32) ausbildet, der bis an die axiale Stirnfläche (27) heranreicht, wobei jedem Antriebsrad (4) ein an einem Gehäusebauteil des Gehäuses (13) ortsfest angeordnetes Ausräumelement (23) zugeordnet ist, welches in den Freiraum (32) hineinragt und sich bis zur axialen Stirnfläche (27) erstreckt.

2. Schrägförderer (2) nach Anspruch 1, **dadurch gekennzeichnet, dass** das Gehäusebauteil eine das zumindest eine Antriebsrad (4) abschnittsweise umgreifende Innenabdeckung (40) ist.

3. Schrägförderer (2) nach Anspruch 1 oder 2, **dadurch gekennzeichnet, dass** der Schrägförderer (2) den Riemen (5) umfasst, wobei das zumindest eine Antriebsrad (4) von dem Riemen (5) abschnittsweise umschlungen ist, der eine Gesamtbreite aufweist, wobei sich der im Wesentlichen ringförmige Freiraum (32) über die Gesamtbreite des Riemens (5) erstreckt.

4. Schrägförderer (2) nach einem der Ansprüche 1 bis 3, **dadurch gekennzeichnet, dass** das Ausräumelement (23) einen in den Freiraum (32) ragenden Räumabschnitt (36) aufweist, welcher einen zur radialen Umfangsfläche (31) tangentialen Verlauf aufweist.

5. Schrägförderer (2) nach einem der Ansprüche 1 bis 3, **dadurch gekennzeichnet, dass** das Ausräumelement (23) einen in den Freiraum (32) ragenden Räumabschnitt (34) aufweist, welcher sich abschnittsweise in axialer Richtung der Nabe (22) erstreckt und unter einem Winkel zur Antriebsachse (11) zur axialen Stirnfläche (27) hin geneigt ist.

6. Schrägförderer (2) nach einem der Ansprüche 1 bis 5, **dadurch gekennzeichnet, dass** die Nabe (22) als separates Bauteil ausgeführt ist.

7. Schrägförderer (2) nach einem der Ansprüche 1 bis 6, **dadurch gekennzeichnet, dass** die Mitnehmer (26) kreiszylindrisch ausgeführt und aus einem Rundstahl gefertigt sind.

8. Schrägförderer (2) nach einem der Ansprüche 1 bis 7, **dadurch gekennzeichnet, dass** die Mitnehmer (26) spielfrei mit der Nabe (22) verbunden sind.

9. Schrägförderer (2) nach Anspruch 8, **dadurch gekennzeichnet, dass** die Mitnehmer (26) zur spielfreien Verbindung mit der Nabe (22) durch einen Kegelsitz oder einen Pressverbund verbunden sind.

10. Schrägförderer (2) nach einem der Ansprüche 1 bis 9, **dadurch gekennzeichnet, dass** die Mitnehmer (26) mittels einer Schraubverbindung (35) mit der Nabe (22) verbunden sind.

11. Schrägförderer (2) nach einem der Ansprüche 1 bis 10, **dadurch gekennzeichnet, dass** dem zumindest einen Antriebsrad (4) in Förderrichtung (39) gesehen ein Abstreifelement (37) vorgelagert an einem weiteren Gehäusebauteil (24) angeordnet ist.

12. Schrägförderer (2) nach Anspruch 11, **dadurch gekennzeichnet, dass** das Abstreifelement (37) eine sich parallel zu dem umlaufenden Riemen (5) bzw. zur Nabe (22) erstreckende Wirkfläche (38) aufweist.

13. Selbstfahrende Erntemaschine (1) mit einem Schrägförderer (2),welcher zumindest einen endlosen Riemen (5) umfasst, welcher zumindest ein Antriebsrad (4) sowie ein Umlenkrad (3) umschlingt, **dadurch gekennzeichnet, dass** das zumindest eine Antriebsrad (4) nach einem der Ansprüche 1 bis 12 ausgebildet ist.

14. Selbstfahrende Erntemaschine (1) nach Anspruch 13, **dadurch gekennzeichnet, dass** der Schrägförderer (2) zwei oder mehr Förderbänder (5) aufweist, die jeweils ein Antriebsrad (4) und ein Umlenkrad (3) umschlingen.

15. Selbstfahrende Erntemaschine (1) nach Anspruch 13 oder 14, **dadurch gekennzeichnet, dass** die Erntemaschine als Mähdrescher (1) ausgeführt ist.

## Claims

1. An inclined conveyor (2) with a housing (13), in which at least one drive wheel (4) is rotatably mounted on a drive axis (11) in order to convey harvested material (8) into a self-propelled harvesting machine (1), wherein the at least one drive wheel (4) is disposed on a drive shaft (21) in a manner which is fixed against rotation by means of a hub (22) which extends concentrically with the drive axis (11), wherein the at least one drive wheel (4) has entrainment members (26) disposed coaxially with the drive axis (11), which are uniformly distributed on an axial end face (27) of the hub (22), wherein the entrainment members (26) extend from the hub (22) to an open end (28) and are provided for interlocking and/or force-locking transport of a belt (5) provided with toothing, **characterized in that** a radial circumferential surface (31) of the hub (22) which faces the entrainment members (26) has a substantially straight cylindrical profile, so that between the entrainment members (26) and the radial circumferential surface (31), a substantially annular free space (32) is formed which reaches to the axial end face (27), wherein a clearing element (23) which is fixedly disposed on a housing component of the housing (13) is associated with each drive wheel (4), the clearing element protruding into the free space (32) and extending up to the axial end face (27).

2. The inclined conveyor (2) according to claim 1, **characterized in that** the housing component is an inner covering (40) which encompasses sections of the at least one drive wheel (4).

3. The inclined conveyor (2) according to claim 1 or claim 2,
**characterized in that** the inclined conveyor (2) comprises the belt (5), wherein sections of the at least one drive wheel (4) are wrapped by the belt (5), which has a total width wherein the substantially annular free space (32) extends over the total width of the belt (5).

4. The inclined conveyor (2) according to one of claims 1 to 3,
**characterized in that** the clearing element (23) has a clear-out section (36) which protrudes into the free space (32) and which has a profile which is tangential to the radial circumferential surface (31).

5. The inclined conveyor (2) according to one of claims 1 to 3,
**characterized in that** the clearing element (23) has a clear-out section (34) which protrudes into the free space (32) and which extends in sections in the axial direction of the hub (22) and is inclined towards the axial end face (27) at an angle to the drive axis (11).

6. The inclined conveyor (2) according to one of claims 1 to 5,
**characterized in that** the hub (22) is constructed as a separate component.

7. The inclined conveyor (2) according to one of claims 1 to 6,
**characterized in that** the entrainment members (26) are constructed as circular cylinders and are fabricated from a round steel.

8. The inclined conveyor (2) according to one of claims 1 to 7, **characterized in that** the entrainment members (26) are connected to the hub (22) without play.

9. The inclined conveyor (2) according to claim 8, **characterized in that** the entrainment members (26) are connected to the hub (22) by a conical seat or a compression joint for the purposes of a connection which is without play.

10. The inclined conveyor (2) according to one of claims 1 to 9,
**characterized in that** the entrainment members (26) are connected to the hub (22) by means of a screw connection (35).

11. The inclined conveyor (2) according to one of claims 1 to 10,
**characterized in that** a scraping element (37) is mounted on a further housing component (24) disposed upstream of the at least one drive wheel (4) viewed in the conveying direction (39).

12. The inclined conveyor (2) according to claim 11, **characterized in that** the scraping element (37) has an active surface (38) which extends parallel to the revolving belt (5) or to the hub (22).

13. A self-propelled harvesting machine (1) with an inclined conveyor (2), which comprises at least one continuous belt (5) which is wrapped around at least one drive wheel (4) as well as a guide wheel (3), **characterized in that** the at least one drive wheel (4) is configured in accordance with one of claims 1 to 12.

14. The self-propelled harvesting machine (1) according to claim 13,
**characterized in that** the inclined conveyor (2) has two or more belt conveyors (5) which are respectively wrapped around a drive wheel (4) and a guide wheel (3).

15. The self-propelled harvesting machine (1) according to claim 13 or claim 14, **characterized in that** the harvesting machine is constructed as a combine harvester (1).

## Revendications

1. Convoyeur incliné (2) comprenant un carter (13) dans lequel au moins une roue d'entraînement (4) est montée tournante sur un axe d'entraînement (11) aux fins de transporter de la récolte (8) dans une machine de récolte automotrice (1), la roue d'entraînement (4), au nombre d'au moins une, étant disposée de manière solidaire en rotation sur un arbre d'entraînement (21) à l'aide d'un moyeu (22) s'étendant de façon concentrique à l'axe d'entraînement (11), la roue d'entraînement (4), au nombre d'au moins une, présentant des entraîneurs (26) qui sont disposés de façon coaxiale avec l'axe d'entraînement (11) et qui sont en même temps disposés de manière à être uniformément répartis sur une face frontale (27) axiale du moyeu (22), les entraîneurs (26) s'étendant à partir du moyeu (22) en direction d'une extrémité ouverte (28) et étant prévus pour le transport par complémentarité de formes et/ou par adhérence d'une courroie (5) réalisée avec une denture, **caractérisé en ce qu'**une surface périphérique (31) radiale du moyeu (22), tournée vers les entraîneurs (26), présente sensiblement une forme de cylindre rectiligne, de sorte qu'il se forme entre les entraîneurs (26) et la surface périphérique (31) radiale, un espace libre (32) sensiblement annulaire qui s'étend jusqu'à la face frontale (27) axiale, sachant qu'est associé à chaque roue d'entraînement (4), un élément débourreur (23) qui est disposé de façon stationnaire sur un élément du carter (13) et qui avance dans l'espace libre (32) et s'étend jusqu'à la face frontale (27) axiale.

2. Convoyeur incliné (2) selon la revendication 1, **caractérisé en ce que** l'élément de carter est un recouvrement interne (40) qui entoure par portions la roue d'entraînement (4), au nombre d'au moins une.

3. Convoyeur incliné (2) selon la revendication 1 ou 2, **caractérisé en ce que** le convoyeur incliné (2) comprend la courroie (5), la roue d'entraînement (4), au nombre d'au moins une, étant entourée par portions par la courroie (5) qui présente une largeur totale, l'espace libre (32) sensiblement annulaire s'étendant sur la largeur totale de la courroie (5).

4. Convoyeur incliné (2) selon une des revendications 1 à 3, **caractérisé en ce que** l'élément débourreur (23) présente une partie de débourrage (36) qui avance dans l'espace libre (32) et présente une forme tangentielle à la surface périphérique (31) radiale.

5. Convoyeur incliné (2) selon une des revendications 1 à 3, **caractérisé en ce que** l'élément débourreur (23) présente une partie de débourrage (34) qui avance dans l'espace libre (32) et s'étend par portions dans le sens axial du moyeu (22) et est incliné en direction de la face frontale (27) axiale en formant un angle par rapport à l'axe d'entraînement (11).

6. Convoyeur incliné (2) selon une des revendications 1 à 5, **caractérisé en ce que** le moyeu (22) est réalisé comme élément séparé.

7. Convoyeur incliné (2) selon une des revendications 1 à 6, **caractérisé en ce que** les entraîneurs (26) sont réalisés sous une forme cylindrique circulaire et sont fabriqués à partir d'un acier rond.

8. Convoyeur incliné (2) selon une des revendications 1 à 7, **caractérisé en ce que** les entraîneurs (26) sont reliés au moyeu (22) sans jeu.

9. Convoyeur incliné (2) selon la revendication 8, **caractérisé en ce que**, pour la liaison sans jeu, les entraîneurs (26) sont reliés au moyeu (22) par un siège conique ou un ajustement serré.

10. Convoyeur incliné (2) selon une des revendications 1 à 9, **caractérisé en ce que** les entraîneurs (26) sont reliés au moyeu (22) par un assemblage à vis (35).

11. Convoyeur incliné (2) selon une des revendications 1 à 10, **caractérisé en ce qu'**un élément racleur (37) est disposé sur un autre élément de carter (24), en amont de la roue d'entraînement (4), au nombre d'au moins une, vu dans le sens du convoyage (39).

12. Convoyeur incliné (2) selon la revendication 11, **caractérisé en ce que** l'élément racleur (37) présente une surface active (38) qui s'étend parallèlement à la courroie (5) en circulation ou au moyeu (22).

13. Machine de récolte automotrice (1) dotée d'un convoyeur incliné (2) qui comprend au moins une courroie (5) sans fin, laquelle entoure au moins une roue d'entraînement (4) et une roue de renvoi (3), **caractérisée en ce que** la roue d'entraînement (4), au nombre d'au moins une, est réalisée selon une des revendications 1 à 12.

14. Machine de récolte automotrice (1) selon la revendication 13, **caractérisée en ce que** le convoyeur incliné (2) présente deux ou plus de deux bandes de convoyage (5) qui entourent chacune une roue d'entraînement (4) et une roue de renvoi (3).

15. Machine de récolte automotrice (1) selon la revendication 13 ou 14, **caractérisée en ce que** la machine de récolte est réalisée comme moissonneuse-batteuse (1).
